# EUROPEAN PATENT SPECIFICATION

(11) **EP 3 302 867 B1**
(45) Date of publication and mention of the grant of the patent: **23.12.2020**
(21) Application number: 16738547.5
(22) Date of filing: 25.05.2016
(51) Int. Cl.: B23K 26/08, B23K 26/38, B23K 37/02, B65G 13/07, B23K 26/16

(54) **LASER CUTTING EQUIPMENT**
LASERSCHNEIDANLAGE
DISPOSITIF DE DÉCOUPE À LASER

(30) Priority: 29.05.2015 PL 41252115
(43) Date of publication of application: 11.04.2018
(73) Proprietor: Przedsiebiorstwo Concept Stal B&s Lejman Spólka, 22-100 Chelm (PL)
(72) Inventor: LEJMAN, Stanislaw, 22-100 Chelm (PL)
(74) Representative: Witek, Rafal
(86) International application number: PCT/IB2016/053053
(87) International publication number: WO 2016/193861

(56) References cited:
- WO-A1-2009/065429
- DE-A1-102004 034 256
- US-A- 3 894 627
- US-A- 4 541 520
- US-A1- 2012 132 501

## Description

The object of the invention is a laser cutting equipment intended primarily for cutting sheet-metal continuously unwound form coils. Laser cutting equipment is becoming more and more popular, also due to the continuous development of laser light sources that manifests itself mainly in the laser power increase, which allows for machining a broader spectrum of materials. Cutting with a laser beam has many advantages, the most significant ones being high accuracy (depending on the diameter of the laser beam spot, even single microns are possible), high-speed, possibility to cut out complex shapes, limited heat impact zone, or a small material loss. A particular application of laser cutting is laser cutting of sheet-metal which enables performance of precise flat metal elements, even from sheet-metal unwound continuously from a coil.

From international patent application No. WO2012034923, a method of laser cutting out of prescribed elements and an equipment carrying out the method is known. the equipment consists of a table and a gate with a laser head moving about it slidably. The design of the gate allows moving the laser head in two axes, and a big performance of laser cutting of any two dimensional shape limited by the gate movement range. the working element that is subject to cutting, for example a sheet of thin metal, is placed on the table on a transparent surface with protrusions extending from it so that the sheet-metal is supported only by a single point of each protrusion. Such table surface structure enables evacuation of material ejected on the opposite side of the laser beam impact in order to protect the other side of the cut sheet-metal from damage. However, such structure does not allow for cutting sheet-metal delivered in a continuous way without stopping and the transparent surface becomes dirty by the ejected melted cut material, which requires performance of a complicated and time-consuming cleaning stage afterwards.

Document DE 102004034256, basis for the preamble of claim 1, discloses a system for laser cutting of thin materials. The system comprises, in particular, to belt feeders situated in such a way that between the end of the first belt feeder and the end of the second belt feeder there is a gap allowing to evacuate the material released during laser cutting. The belt feeders are designed in such a way that the said gap can move along the direction of transport of the material band subject to machining and the movement is coordinated with the movement of the gate with a laser had mounted on it in such a way that the gap is always under the laser beam from the head. The gate with the laser head provides movement into perpendicular directions, enabling cutting any two-dimensional shapes from the metal sheet band transported along the table. Laser cutting is, in this arrangement, Limited to the size of the gate and the laser head unit, brass the construction of the belt conveyors imposes their length greater than the length of the gate and the laser head unit. Furthermore, controlling the movement of the gap between the conveyors is obstructed because it requires coupling a larger number of components and taking into account a larger number of factors. Moreover, belt conveyors as such are not suitable for some applications in sheet-metal unwound from coil, in particular in case of subjecting the sheet-metal to thermal treatment in previous stages, which is connected with the necessity to cool down the sheet-metal before placing it on such belt conveyor, extending the production process and inducing its negative economic effect.

International patent application No. WO2010085486 discloses a system for laser cutting intended for cutting from bands of thin sheet-metal. The system comprises two conveyor assemblies consisting of a number of the arranged conveyor belts, situated along the transfer direction of the material subject to laser cutting in such a way that between the first conveyor assembly and the second conveyor assembly there is a gap. The gap present between the conveyor assemblies is to provide free space for evacuating the material subject to laser cutting, e.g. melted metal. The laser cutting system comprises also a bridge crane system with a gate comprising a laser had which enables movement in two perpendicular axes. each conveyor assembly comprises a number of transporting bells, wherein each of them can independently change its shift along the sheet-metal transport direction and the movement, as well as the movement of bridge crane assembly, is controlled by means of an appropriate controller. This system, due to the application of independent conveyor belts, enables adjusting the shape of the gap between the conveyor assemblies to the requirements of cutting, i.e. it is possible to perform, among others, arced or oblique cuts in the sheet-metal. Like in the previous case, the conveyor assemblies must be much longer than that bridge crane assembly in order to cover the whole bridge crane area, and independent control of conveyor belts requires using of complex solutions, based on separate, often computer-based, control systems. Besides, conveyor belts can get damaged during transporting hot sheet-metal leaving from previous annealing stages.

The technical challenge faced by the present invention presented such an equipment for laser cutting, and allowing for cutting sheet-metal, in particular sheet-metal unwound from a coil, preferably hot sheet-metal unwound from a coil, coming from the previous thermal treatment process, wherein the equipment and the corresponding method should provide proper evacuation of material during laser cutting without causing damage to the table, they should allow to perform laser cutting on the whole working area of the table, wherein the solution should be simple in implementation, free from complex control systems, and must not cause damage to the transported sheet-metal. Unexpectedly, the said technical problems have been solved by the present invention.

The present invention defines a laser cutting equipment according to claim 1, and comprising a table along which a band of sheet-metal unwound from a coil moves continuously, a gate assembly equipped with a laser head, and a control system, wherein the gate assembly is slidably moved over the table surface in two perpendicular table plane axes, wherein the table comprises a plurality of supporting rolls, deployed perpendicular to the sheet-metal transport direction at preset distances, not larger than the diameter of a single support roll, wherein the supporting rolls are bearing mounted in such a way that they can freely rotate around their own axes, and there is a follow-up table equipped with a slot to evacuate material subject to laser machining in the table between the supporting rolls, and the movement of the follow-up table along the axis of the sheet-metal movement is coordinated with the gate assembly movement, wherein the supporting rolls are seated in the table guide and are slidably moved along the axis of the sheet-metal transport direction, wherein the supporting rolls are connected with one another by means of flexible connectors. In a preferred embodiment of the present invention, the supporting rolls have a drive, preferably electric, controlled from the control system in order to give them rotational speed, corresponding to the linear speed of the sheet-metal band movement. In another preferred embodiment of the invention, the flexible connectors are selected from a group comprising: pull tabs, chains, ropes, threads.

According to the present invention, the supporting rolls are made of material resistance to high temperatures.

In a preferred embodiment, these supporting rolls are made of steel.

According to the present invention, the slot of the follow-up table has a variable width.

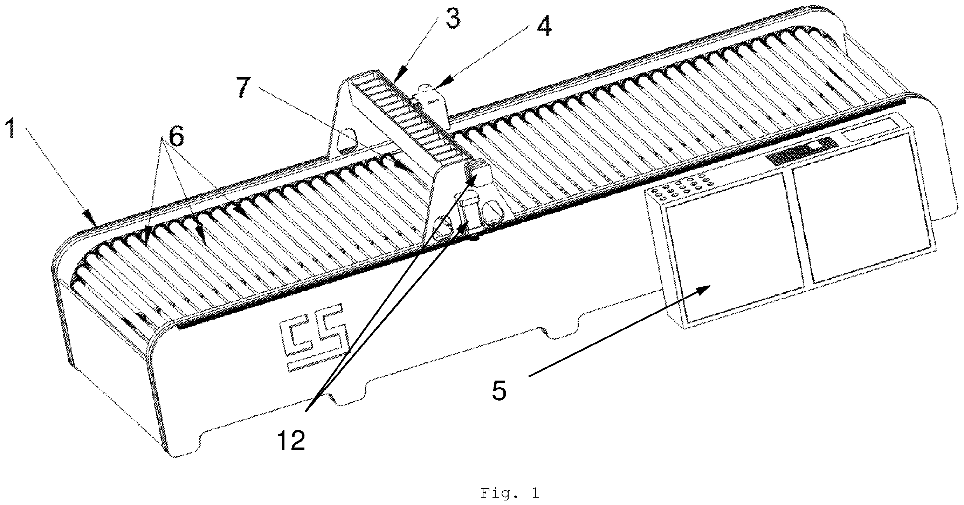

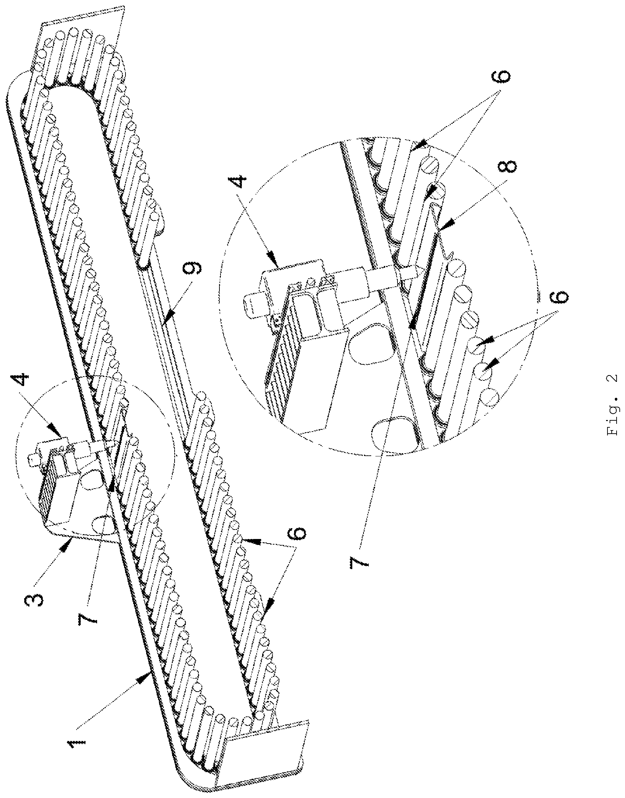

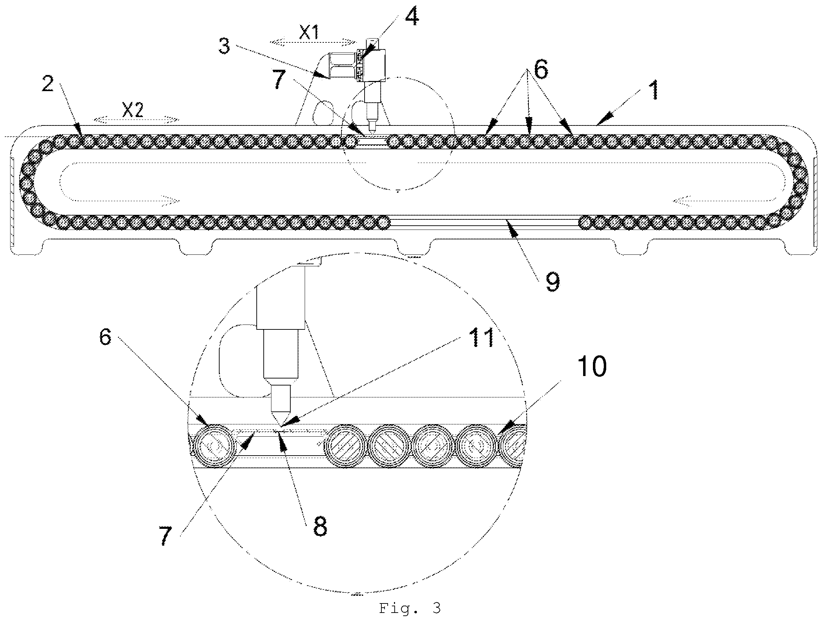

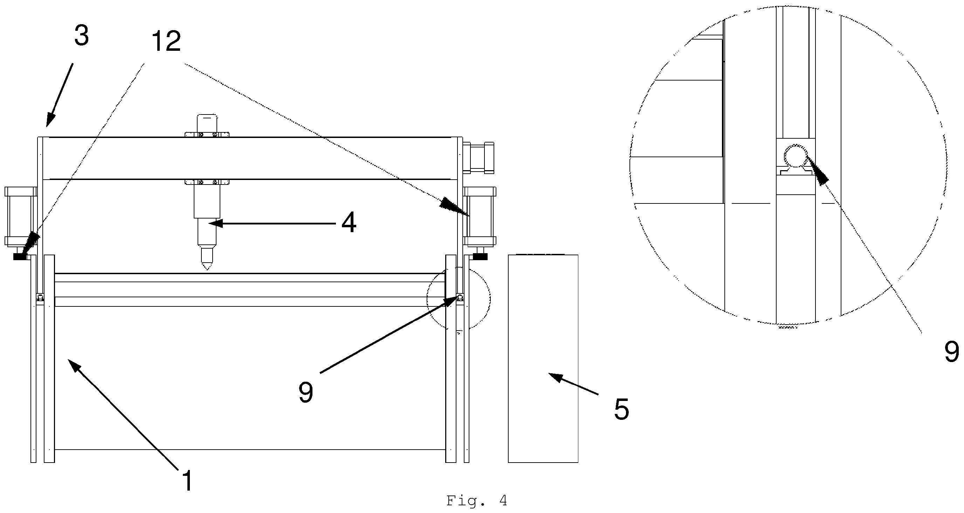

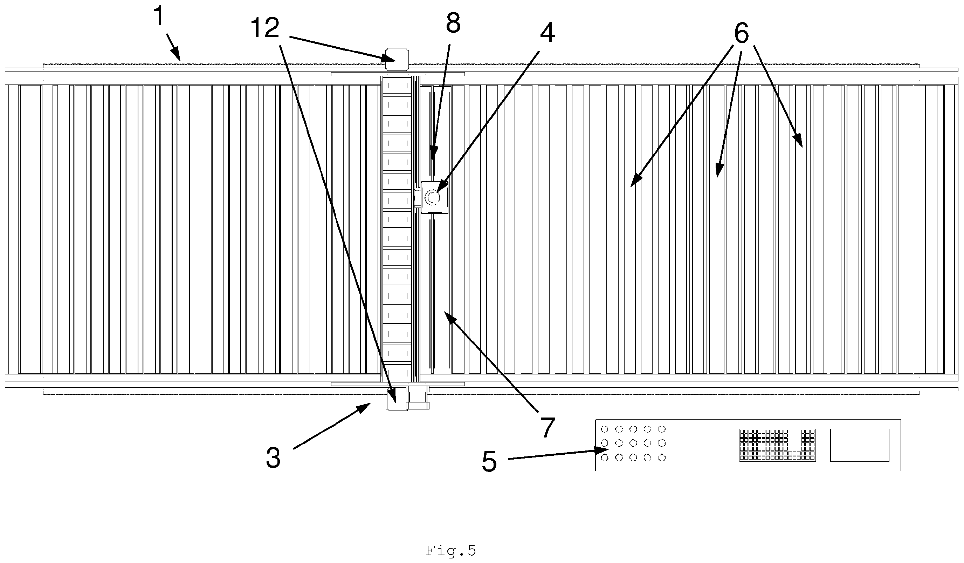

Exemplary embodiments of the present invention have been presented in the drawing, where fig. 1 presents an isometric view of the laser cutting equipment, fig. 2 presents an isometric view of the laser cutting equipment of fig. 1 with a magnified view of the laser head assembly situated over the slot, fig. 3 illustrates the longitudinal cross-section of the equipment of fig. 2 in a lateral view, with a magnified view of the laser head assembly situated over the slot, fig. 4 represents the front view of the laser cutting device with the magnified view of the guide assembly, and fig. 5 presents a top the laser cutting equipment.

### Example

The laser cutting equipment according to the present invention has been illustrated in the figures 1-5. In particular, the equipment consists of a table 1, a gate assembly 3, and a control system 5. The table 1 comprises a frame comprising guides 9 on external lateral surfaces of longitudinal structural elements. The said guides 9 are adopted to receive cylindrical supporting rolls 6 that make the working area of the table 1, on which sheet-metal band 2 unwound from a coil is continuously moved. A plurality of cylindrical supporting rolls 6 are arranged perpendicular to the sheet-metal transport direction 2, with the preset distance between the neighboring supporting rolls 6, being 1/4 the diameter the supporting roll 6. Each supporting troll 6 has a bearing which provides it with a free movement around its own axis, due to which the sheet-metal 2 moving in on the table 1 does not get damaged due to friction against the table 1 surface. Furthermore, the supporting rolls number six have an independent electric drive controlled by means of the control system 5, which enables putting them into rotational movement of a speed corresponding to the linear speed of the sheet-metal band 2 moving it on the table 1. Additionally, the supporting rolls 6 are made of material resistance to high-temperature, i.e. steel, thus the sheet-metal band 2, leaving the preceding thermal treatment step, does not need additional cooling steps or stopping in order to lower the temperature. A plurality of supporting rolls number six are connected with one another by means of the pull tab 10, thus they are movement is coordinated with retaining full flexibility. flexible pull tabs 10 join to neighboring supporting rolls 6 in such a way that they keep constant relative position in the force the slidable movement of each next supporting role 6. Between the supporting rolls 6, substantially central supporting rolls 6 appearing in a series, a follow-up table 7 having a variable slot 8 is situated. The follow-up table 7 is connected with a series of supporting rolls 6 by means of flexible pull tabs 10 so that it moves together with the supporting rolls 6, keeping constant position between the supporting rolls 6.

Over the table 1 the gate assembly 3 is situated, equipped with a laser head 4, in such a way that it moves slidably along the whole length of the table 1. The laser head 4 is mounted on a carriage which provides independent movement of laser head 4 along the width of the table 1, perpendicular to the movement of the gate. cup therefore, the laser head 4 can move along to perpendicular axes or the whole surface of the table 1. The movement of the gate assembly 3 in the transport direction of sheet-metal 2 is coordinated with the movement of the follow-up table 7 in such a way that the slot 8 in the follow-up table 7 is always situated under the laser nozzle 11 of the laser head 4, thus enabling evacuation of the Material, i.e. melted metal, outside the table 1 surface area, providing keeping it clean and undamaged.

In the presented embodiment of the invention, the application of the follow-up table 7, with the movement integrated with the movement of the gate assembly 3 with the laser head 4 enabled movements in two directions, X1 and X2 (additionally to the perpendicular direction Y), thanks to which it was possible to cut material 2 unwound from a coil without the necessity to change the unwinding speed or stopping the material 2 for the time of cutting. Furthermore, due to mounting the supporting rolls 6 in bearings, they could be freely rotated by the cut material 2, thanks to which they do not damage the material 2 surface. The application of supporting rolls 6 rotation drive, in turn, in order to give them rotation speed corresponding to the linear speed of sheet-metal 2 movement significantly reduced friction and was particularly favorable in case of materials with thin coating, prone to wear and abrasion. Combination of the follow-up table 7 movement with the movement of the gate assembly 3 with the laser head 4 provided fixed position of the cutting beam in the slot 8, between the supporting rolls 6 of the table 1, thanks to which the table 1 did not get damaged by the laser beam during cutting. That, in turn, excluded the need to replace the elements of the table 1 supporting the material 2, in comparison with traditional tables used in laser cutting equipment. The design of the laser cutting equipment according to the present invention allowed to provide a single element table 1 module, wherein the gate 3 movement is provided over the whole table 1 surface. This allowed to increase the versatility of the equipment, in particular as a component of a line processing sheet-metal unwound from a coil.

## Claims

1. Laser cutting equipment, comprising a table (1) along which a band of sheet-metal (2) unwound from a coil moves continuously, a gate assembly (3) equipped with a laser head (4), and a control system (5), wherein the gate assembly (3) is slidably moved over the table (1) surface in two perpendicular table (1) plane axes, and the table (1) comprises a plurality of supporting rolls (6), deployed perpendicular to the sheet-metal (2) transport direction at preset distances, not larger than the diameter of a single support roll (6), wherein the supporting rolls (6) are bearing mounted in such a way that they can freely rotate around their own axes, and there is a follow-up table (7) equipped with a slot (8) to evacuate material subject to laser machining in the table (1) between the supporting rolls (6), while the movement of the follow-up table (7) along the axis of the sheet-metal (2) movement is coordinated with the gate assembly (3) movement, **characterized in that** the supporting rolls (6) are seated in the table guide (9) and are slidably moved in it along the axis of the sheet-metal (2) transport direction, wherein the supporting rolls (6) are connected with one another by means of flexible connectors (10), wherein supporting rolls (6) are made of material resistant to high temperatures, wherein the movable slot (8) of the follow-up table (7) has a variable width.

2. The equipment according to claim 1, **characterized in that** the supporting rolls (6) have a drive, preferably electric, controlled from the control system (5) in order to give them rotational speed, corresponding to the linear speed of the sheet-metal band (2) movement.

3. The equipment according to claim 1 or 2, **characterized in that** the flexible connectors (10) are selected from a group comprising: pull tabs, chains, ropes, threads.

4. The equipment according to any of claims 1 to 3, **characterized in that** the supporting rolls (6) are made of steel.

## Patentansprüche

1. Laserschneidevorrichtung, umfassend einen Tisch (1), entlang dessen sich ein von einer Rolle abgewickeltes Band aus Metallblech (2) kontinuierlich bewegt, eine mit einem Laserkopf (4) ausgestattete Toranordnung (3), ein Steuerungssystem (5), wobei die Toranordnung (3) über die Oberfläche des Tisches (1) in zwei senkrechten Achsen der Ebene des Tisches (1) gleitend bewegt wird, und der Tisch (1) eine Vielzahl von Unterstützungsrollen (6) aufweist, welche in vorgegebenen Abständen nicht größer als der Durchmesser einer einzelnen Unterstützungsrolle (6) senkrecht zur Transportrichtung des Metallbleches (2) eingesetzt sind, wobei die Unterstützungsrollen in einer solchen Weise gelagert sind, dass sie sich frei um ihre eigenen Achsen drehen können, und es einen Nachlauftisch (7) gibt, ausgestattet mit einem Schlitz (8) zum Absaugen von durch die Laserbearbeitung hervorgerufenem Material im Tisch (1) zwischen den Unterstützungsrollen (6), während die Bewegung des Nachlauftisches (7) entlang der Achse der Bewegung des Metallblechs (2) mit der Bewegung der Toranordnung (3) koordiniert wird, **gekennzeichnet dadurch, dass** die Unterstützungsrollen (6) in der Tischführung (9) eingesetzt sind und darin entlang der Achse der Transportrichtung des Metallblechs (2) gleitend bewegt werden, wobei die Unterstützungsrollen (6) mittels flexibler Verbinder (10) miteinander verbunden sind, wobei Unterstützungsrollen (6) aus gegen hohe Temperaturen widerstandsfähigem Material gemacht sind, wobei der bewegliche Schlitz (8) des Nachlauftisches (7) eine variable Breite hat.

2. Die Vorrichtung nach Anspruch 1, **dadurch gekennzeichnet, dass** die Unterstützungsrollen (6) einen vorzugsweise elektrischen Antrieb haben, welcher vom Steuerungssystem (5) gesteuert wird, um ihnen Drehgeschwindigkeit korrespondierend zur linearen Geschwindigkeit der Bewegung des Metallblechbandes (2) zu geben.

3. Die Vorrichtung nach Anspruch 1 oder 2, **dadurch gekennzeichnet, dass** die flexiblen Verbinder (10) aus einer Gruppe ausgewählt sind, welche Zugschlaufen, Ketten, Seile, Fasern umfasst.

4. Die Vorrichtung nach einem der Ansprüche 1 bis 3, **dadurch gekennzeichnet, dass** die Unterstützungsrollen (6) aus Stahl gem

## Revendications

1. Equipement de découpe laser, comprenant une table (1) le long de laquelle une bande de tôle (2) déroulée d'une bobine se déplace en continu, un ensemble grille (3) pourvu d'une tête laser (4) et un système de commande (5), dans lequel l'ensemble grille (3) est déplacé en coulissant sur la surface de la table (1) dans deux axes perpendiculaires de plan de la table (1), et la table (1) comprend une pluralité de rouleaux de support (6), déployés perpendiculairement à la direction de transport de tôle (2) à des distances prédéfinies, pas plus grandes que le diamètre d'un seul rouleau de support (6), dans lequel les rouleaux de support (6) sont montés sur palier de manière à pouvoir tourner librement autour de leurs propres axes, et en ce qu'il y a une table de suivi (7) pourvue d'une fente (8) pour évacuer un matériau soumis à un usinage laser dans la table (1) entre les rouleaux de support (6), pendant que le déplacement de la table de suivi (7) le long de l'axe de déplacement de tôle (2) est coordonné avec le déplacement d'ensemble grille (3), **caractérisé en ce que** les rouleaux de support (6) sont assis dans le guide de table (9) et sont déplacés en coulissant dans celui-ci le long de l'axe de la direction de transport de tôle (2), dans lequel les rouleaux de support (6) sont raccordés l'un à l'autre au moyen de raccords souples (10), dans lequel les rouleaux de support (6) sont constitués d'un matériau résistant à hautes températures, dans lequel la fente mobile (8) de la table de suivi (7) a une largeur variable.

2. Equipement selon la revendication 1, **caractérisé en ce que** les rouleaux de support (6) ont un entraînement, de préférence électrique, commandé depuis le système de commande (5) afin de leur conférer une vitesse de rotation, correspondant à la vitesse linéaire du déplacement de bande de tôle (2).

3. Equipement selon la revendication 1 ou 2, **caractérisé en ce que** les raccords souples (10) sont sélectionnés dans un groupe comprenant: tirettes, chaînes, cordes, filetages.

4. Equipement selon l'une quelconque des revendications 1 à 3, **caractérisé en ce que** les rouleaux de support (6) sont constitués d'acier.
